# NEUE EUROPÄISCHE PATENTSCHRIFT

(11) **EP 1 615 815 B2**
(45) Veröffentlichungstag und Bekanntmachung des Hinweises auf die Entscheidung über den Einspruch: **06.03.2013**
(45) Hinweis auf die Patenterteilung: 31.12.2008
(21) Anmeldenummer: 04711588.6
(22) Anmeldetag: 17.02.2004
(51) Int. Cl.: B62D 1/184

(54) **KLEMMVORRICHTUNG FÜR DIE LENKSÄULE EINES KRAFTFAHRZEUGES**
CLAMPING DEVICE FOR THE STEERING COLUMN OF A MOTOR VEHICLE
DISPOSITIF DE SERRAGE POUR BLOQUER LA COLONNE DE DIRECTION D'UN VEHICULE AUTOMOBILE

(30) Priorität: 19.04.2003 DE 10318034
(43) Veröffentlichungstag der Anmeldung: 18.01.2006
(73) Patentinhaber: Eggers, Fred, 21614 Buxtehude (DE); Harms, Torsten, 21129 Hamburg (DE); Kittler, Holger, 22761 Hamburg (DE); Sagner, Sven, 22309 Hamburg (DE)
(72) Erfinder: Eggers, Fred, 21614 Buxtehude (DE); Harms, Torsten, 21129 Hamburg (DE); Kittler, Holger, 22761 Hamburg (DE); Sagner, Sven, 22309 Hamburg (DE)
(74) Vertreter: Meyer, Ralph
(86) Internationale Anmeldenummer: PCT/EP2004/001467
(87) Internationale Veröffentlichungsnummer: WO 2004/094214

(56) Entgegenhaltungen:
- EP-A- 0 802 104
- EP-A2- 1 433 687
- JP-U- 55 085 964
- US-A- 5 700 032
- US-A1- 2002 011 725

## Beschreibung

Die Erfindung betrifft eine Klemmvorrichtung für die Lenksäule eines Kraftfahrzeuges gemäß dem Oberbegriff des Patentanspruches 1.

Eine gattungsgemäße Klemmvorrichtung ist aus der EP 0 802 104 B1 bekannt. Dort ist eine Lenksäule mit einer Klemmvorrichtung beschrieben, bei der an einer Montagekonsole, die an einem Karosserieteil eines Kraftfahrzeuges angebracht ist, zwei parallele vertikal nach unten verlaufende Schenkel abstehen. Die Schenkel weisen Durchgangslöcher auf, durch die einerseits ein Haltebolzen und andererseits ein Spannbolzen hindurchragt. Neben den Außenseiten der Schenkel sind auf den Bolzen sich einander kreuzende Lamellenpakete angeordnet, von denen die einen aus Metalllamellen bestehen, die im wesentlichen vertikal verlaufen, und die anderen aus Metalllamellen zusammengesetzt sind, die im wesentlichen horizontal verlaufen. Die Lamellen sind alternierend nach Sandwichform geschichtet und weisen Langlöcher auf, die sich überlappen. In diesem Überlappungsbereich durchsetzt der Spannbolzen die Langlöcher, welche dazu dienen, dass die Lenksäule in Längs-und in Höhenrichtung in bestimmten Grenzen verstellt werden kann. Die Durchgangslöcher der Schenkel, die von den Langlöchern der Lamellen überdeckt werden, sind als entsprechend gekreuzte Langlöcher ausgebildet. Die horizontal verlaufenden Metalllamellen sind an beiden Enden am Mantelrohr befestigt, wodurch nach Festziehen des Spannbolzens mit einer Kontermutter über die Enden der horizontal verlaufenden Lamellen eine Klemmkraft auf das Mantelrohr ausgeübt wird. Die bekannte Klemmvorrichtung ist vielteilig, kompliziert ausgebildet und recht aufwendig herzustellen.

Aus der US 2002/0011725 A1 ist eine Klemmvorrichtung (insbesondere Fig. 18) zur Höhen- und Längsverstellung einer Lenksäule eines Kraftfahrzeugs entnehmbar, wobei die Vorrichtung zwei vertikale parallel zueinander verlaufende backenförmige Bauteile beinhaltet, die gleich dick ausgebildet und Teil eines Konsolehbauteils sind, das fahrzeugfest fixiert ist. Zwischen den backenförmigen Bauteilen, die zwei einander gegenüberliegende Durchgangsöffnungen aufweisen, erstreckt sich ein Mantelrohr der Lenksäule. Die Vorrichtung enthält des Weiteren einen Klemmbolzen, der die Durchgangsöffnungen durchragt und zur Aufbringung der Klemmkraft mit einem Konterglied verspannend zusammenwirkt, wobei der Bolzenkopf auf Seiten der Außenseite des einen backenförmigen Bauteils und das Konterglied auf Seiten der Außenseite des anderen backenförmigen Bauteils angeordnet ist.

Die nachveröffentlichte DE 102 61 538 A1 zeigt ebenfalls eine Klemmvorrichtung für eine Kraftfahrzeuglenksäule, die Haltebacken aufweist, welche an einer mit der Fahrzeugkarosserie verbindbaren Montagekonsole befestigt sind. Die Haltebacken sind in unterschiedlichen Ausführungsformen gleich oder unterschiedlich dick ausgestaltet und tragen an ihrer Außenseite mit Haltebolzen jeweils Lamellenpakete, über die das sich zwischen den Haltebacken erstreckende Mantelrohr verspannt werden kann.

Der-Erfindung liegt die Aufgabe zugrunde, eine gattungsgemäße Klemmvorrichtung dahingehend weiterzubilden, dass sie trotz Vereinfachung ihrer Gestaltung eine ausreichende Klemmkraft auf das Mantelrohr und damit eine ausreichende Haltekraft zur Lagefixierung des Mantelrohres gegenüber Missbrauchs- oder Betriebskräften ermöglicht.

Die Aufgabe ist erfindungsgemäß durch die Merkmale des Patentanspruches 1 gelöst.

Aufgrund der besonderen Ausbildung der beiden backenförmigen Bauteile hinsichtlich ihrer Steifigkeit einerseits und Elastizität andererseits kann das Mantelrohr in einfacher Weise allein zwischen den beiden Bauteilen durch Anziehen des Spannbolzens in Verbindung mit dem Konterglied definiert eingeklemmt werden. Zusätzliche Bauteile sind für die Gewährleistung einer ausreichenden Klemmfunktion nicht erforderlich. Gleichzeitig eine ausreichende Haltekraft zur Lagefixierung des Mantelrohres gegenüber Missbrauchs- oder Betriebskräften erreicht.

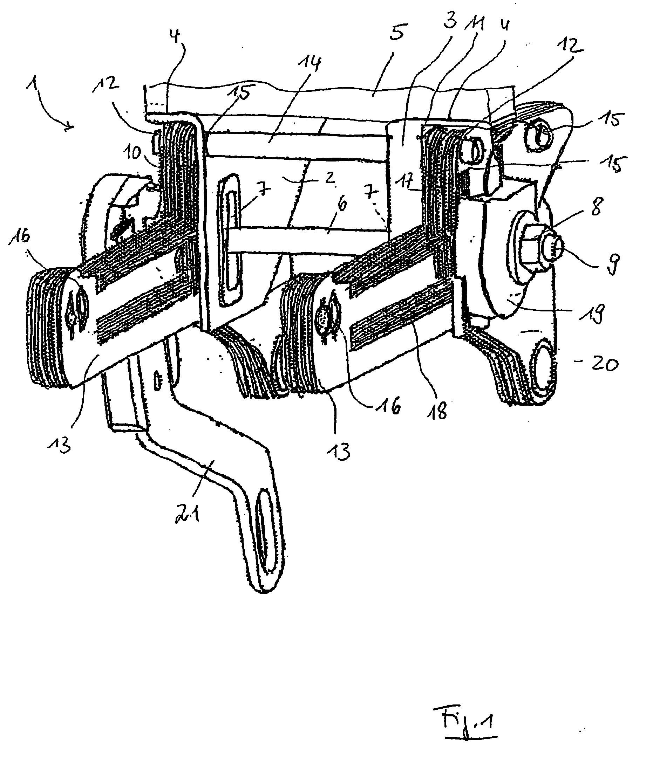

Zweckmäßige Ausgestaltungen der Erfindung können den Unteransprüchen entnommen werden; im übrigen ist die Erfindung anhand eines in der Zeichnung dargestellten Ausführungsbeispieles nachfolgend näher erläutert; dabei zeigt die Figur 1 in einer perspektivischen Ansicht eine erfindungsgemäße Klemmvorrichtung ohne eingeklemmtes Mantelrohr.

In Fig. 1 ist eine Klemmvorrichtung 1 für die Lenksäule eines Kraftfahrzeuges dargestellt, wobei die Vorrichtung 1 zwei vertikale parallel zueinander verlaufende backenförmige Bauteile 2, 3 - im folgenden Klemmbacken genannt - beinhaltet. Die Klemmbacken 2, 3 können in einfacher Weise unmittelbar an der Karosserie des Fahrzeuges angebracht, insbesondere angeschraubt oder geschweißt sein. Dazu muss jedoch das entsprechende Blech oder hohlprofilförmige Träger der Karosserie geeignet gestaltet sein um eine Befestigungsfläche zu bieten, an der die Montage prozesssicher und langzeithaltbar erfolgen kann. Denkbar ist auch eine komplexe Anpassung der Befestigungsflächen 4 der Klemmbacken 2, 3 an die Karosseriegegebenheiten. Alternativ können die Klemmbacken 2, 3 auch an einer Montagekonsole 5 befestigt sein, welche selbst fahrzeugfest fixiert ist. Dies erbringt eine einfachere Gestaltung der waagrecht abgewinkelten Befestigungsflächen 4 der Klemmbacken 2, 3, die nun nicht mehr an die entsprechenden Gegenflächen der Karosserie angepasst werden müssen, sondern eben ausgebildet werden können. Außerdem können dadurch die Klemmbacken 2, 3 bei einer Verschraubung mit der Montagekonsole 5 durch in dieser ausgebildete Langlöcher in Erstreckungsrichtung des Mantelrohres der Lenksäule justiert werden, womit zum einen Fertigungstoleranzen der Klemmbacken 2, 3 ausgeglichen werden, die gegebenenfalls ein einfaches Durchstecken eines Klemmbolzens 6 durch miteinander fluchtende Durchgangsöffnungen 7 der Klemmbacken 2, 3 be- oder gar verhindern können. Zum anderen kann die Lage der Klemmbacken 2, 3 in einfacher Weise an unterschiedlich ausgebildete Lenksäulen angeglichen werden.

Der Klemmbolzen 6 durchsetzt die Durchgangsöffnungen 7 der Klemmbacken 2, 3 und wirkt zur Aufbringung der Klemmkraft mit einem Konterglied 8 in Form einer Mutter nach Anziehen des Bolzens 6 verspannend zusammen, wobei der Bolzen 6 an seinem Außenumfang zumindest an seinem einen Ende 9 ein Gegengewinde zum Innengewinde der Mutter trägt. Der Bolzenkopf ist dabei auf Seiten der Außenseite 10 des Klemmbackens 2 und das Konterglied 8 auf Seiten der Außenseite 11 des Klemmbackens 3 angeordnet. Um das hier nicht dargestellte Mantelrohr der Lenksäule, das sich zwischen den Klemmbacken 2, 3 erstreckt, klemmen zu können, ist der Klemmbacken 2 in Dickenrichtung, also in Richtung der Erstreckung des Klemmbolzens 6 elastisch ausgebildet, während der Klemmbacken 3 in Dickenrichtung biegesteif gestaltet ist und damit ein starres Bezugbauteil bildet, gegen das das Mantelrohr sicher verspannt werden kann und das dem Mantelrohr eine stabile definierte Seitenlage gibt. Die elastischen Eigenschaften des Klemmbackens 2 einerseits und die biegesteifen Eigenschaften des Klemmbackens 3 andererseits lassen sich beispielsweise durch die gezielte Auswahl unterschiedlicher Materialien erreichen, wobei die Wandstärke der beiden Klemmbacken 2, 3 durchaus gleich sein kann, was gegebenenfalls Bauraum spart. Des weiteren können die beiden Klemmbacken 2, 3 alternativ bei gleichem Werkstoff oder zusätzlich zur unterschiedlichen Werkstoffwahl so ausgebildet sein, dass der biegesteife Klemmbacken 3 mit einer entsprechend großen Wandstärke und der elastische Klemmbacken 2 mit einer entsprechend geringen Wandstärke versehen ist. Mit den Variierungsmöglichkeiten der Wandstärke und des Materialeinsatzes ist die Klemmkraft über einen relativ weiten Bereich maßgeschneidert einstellbar. Eine preiswerte Variante ist die der Wahl eines einzigen Werkstoffes für beide Klemmbacken 2, 3 und die gezielte Festlegung unterschiedlicher Wandstärken hinsichtlich den jeweiligen vorbestimmten Funktionen der Klemmbacken 2, 3.

Wie erwähnt durchsetzt der Klemmbolzen 6 die einander gegenüberliegenden Durchgangsöffnungen 7 der Klemmbacken 2, 3. In Einbaulage des Mantelrohres kann der Klemmbolzen 6 unterhalb des Mantelrohres verlaufen oder dieses in geeigneten Öffnungen durchdringen. Die Durchgangsöffnungen 7 sind hier in Form von im wesentlichen vertikal verlaufenden Langlöchern ausgebildet, was bei gelöster Klemmung der Klemmvorrichtung 1 die Lenksäule zu einer Höhenverstellung befähigt.

Zwischen dem Bolzenkopf und der Außenseite 10 des Klemmbackens 2 und zwischen der Mutter und der Außenseite 11 des Klemmbackens 3 ist jeweils ein Paket von dünnen Metalllamellen 12, 13 angeordnet, wobei die Lamellen 12 im wesentlichen vertikal und die Lamellen 13 im wesentlichen horizontal verlaufen. Die Lamellen 12 und 13 sind alternierend sandwichartig aufeinander gestapelt, wobei die Lamellen 12 mittels zweier beabstandeter, paralleler und auf in etwa gleicher Höhe liegender Trägerbolzen 14 an den Klemmbacken 2, 3 drehfest gehalten sind, die diese im Bereich deren Befestigungsflächen 4 quer durchragen. Die Lamellen 12 weisen dazu Durchtrittsöffnungen 15 für den Bolzen 14 auf. Die Lamellen 13 weisen ihrerseits Befestigungsöffnungen 16 an beiden Enden auf, die von einem Haltebolzen durchdrungen werden, welcher gleichzeitig das Mantelrohr in entsprechenden Öffnungen durchsetzt, so dass die Lamellen 13 am Mantelrohr gehalten sind. Die Lamellen 12, 13 sind in Querrichtung elastisch verformbar. Durch Anziehen des Klemmbolzens 6 wird dabei bei Vorhandensein derartiger Lamellenpakete die Haltekraft auf das Mantelrohr weiter erhöht und breiter verteilt, wobei die horizontalen Lamellen 13 an ihren Enden am Mantelrohr befestigt sind und dadurch eine zusätzliche Haltekraft bewirken. Aufgrund der elastischen Nachgiebigkeit der Lamellen 12, 13, entsteht beim Ausüben der Klemmung ein Reibungssystem der Lamellen 12, 13 mit dem Mantelrohr und es kommt durch die in der Anlage am Mantelrohr angenähert ausgebildete Anschmiegung der Lamellen 12, 13 zu einem Quasiformschluss, wodurch insgesamt der Umsatz von Klemmkraft in Haltekraft für das Mantelrohr erhöht wird.

Des weiteren besitzen die Lamellen 12, 13 langlochartige Längsschlitze 17, 18, wobei die Längsschlitze 17 der Lamellen 12 vertikal ausgerichtet sind und die Längsschlitze 18 der Lamellen 13 in deren Längsrichtung verlaufen. Die Längsschlitze 17 und 18 kreuzen sich im Bereich der Durchgangsöffnungen 7 der Klemmbacken 2, 3 und werden ebenfalls vom Klemmbolzen 6 durchragt. Über die Längsschlitze 17, die die Durchgangsöffnungen 7 überdecken, wird die durch die Durchgangsöffnungen 7 theoretisch mögliche Höhenverstellung der Lenksäule bei der Anordnung eines Lamellenpaktes an den Außenseiten der Klemmbacken 2, 3 auch praktisch gewährleistet. Die Längsschlitze 18 der Lamellen 13 bieten die Möglichkeit einer Längsverstellung der Lenksäule.

Die Klemmvorrichtung beinhaltet weiterhin eine Druckverteilungsscheibe 19, die zwischen dem Konterglied 8 und der Außenseite 20 einer außen liegenden Lamelle 12 angeordnet ist und von dem Klemmbolzen 6 durchragt wird, wobei nach Anziehen des Kontergliedes 8 die Scheibe 19 fest auf die Lamellen 12 gedrückt wird. Hierbei wird die Klemmkraft zusätzlich weitläufiger verteilt, so dass eine verbesserte Klemmung des Mantelrohres erzielt wird. Auf der gegenüberliegenden Seite der Druckverteilungsscheibe 19 greift am Bolzenkopf ein Hebel 21 ein, mit dem zum einen bei der Montage das Handling bei der Verklemmung erleichtert wird und zum anderen die Klemmung bedarfsweise gelöst wird, so dass das Mantelrohr verstellt werden kann. Das rotatorische Drehmoment des Hebels 21 wird dabei in einen axialen Hub mit einer axialen Klemmkraft gewandelt.

## Patentansprüche

1. Klemmvorrichtung (1) für die Lenksäule eines Kraftfahrzeuges, welche Vorrichtung (1) zwei vertikale parallel zueinander verlaufende backenförmige Bauteile (2, 3) beinhaltet, die unmittelbar an der Karosserie des Fahrzeugs angebracht oder an einer fahrzeugfest fixierten Montagekonsole (5) befestigt sind, zwischen denen sich ein Mantelrohr der Lenksäule erstreckt und die zwei einander gegenüberliegende Durchgangsöffnungen (7) aufweisen, wobei die Vorrichtung (1) des Weiteren einen Klemmbolzen (6) enthält, der die Durchgangsöffnungen (7) durchragt und zur Aufbringung der Klemmkraft mit einem Konterglied (8) verspannend zusammenwirkt, wobei der Bolzenkopf auf Seiten der Außenseite (11) des einen backenförmigen Bauteils (2) und das Konterglied (8) auf Seiten der Außenseite (11) des anderen backenförmigen Bauteils (3) angeordnet ist,
**dadurch gekennzeichnet, dass**
das eine backenförmige Bauteil (2) zumindest in Dickenrichtung elastisch und das andere backenförmige Bauteil (3) zumindest in Dickenrichtung biegesteif ausgebildet ist.

2. Vorrichtung nach Anspruch 1,
**dadurch gekennzeichnet,**
**dass** beide Bauteile (2, 3) aus dem gleichen Material gebildet sind, wobei das biegesteife Bauteil (3) mit einer entsprechend großen Wandstärke und das elastische Bauteil (2) mit einer entsprechend geringen Wandstärke ausgebildet sind.

3. Vorrichtung nach einem der Ansprüche 1 oder 2,
**dadurch gekennzeichnet,**
**dass** die beiden Bauteile (2, 3) an der Karosserie des Fahrzeuges angebracht sind.

4. Vorrichtung nach einem der Ansprüche 1 oder 2,
**dadurch gekennzeichnet,**
**dass** die beiden Bauteile (2, 3) an einer Montagekonsole (5) angeordnet sind, welche fahrzeugfest fixiert ist.

5. Vorrichtung nach einem der Ansprüche 1 bis 4,
**dadurch gekennzeichnet,**
**dass** auf dem Klemmbolzen (6) neben einer Außenseite (10, 11) zumindest eines der Bauteile (2, 3) wenigstens eine in Querrichtung elastische Lamelle (12, 13) angeordnet ist, die am Mantelrohr der Lenksäule befestigt ist.

## Claims

1. Clamping device (1) for the steering column of a motor vehicle, said device (1) comprising two jaw-shaped components (2, 3) running vertically parallel to one another, which are fixed directly to the vehicle body or to a mounting bracket (5) which is firmly fixed to the vehicle, between which a casing tube of the steering column extends and which have two opposing through-openings (7), the device (1) additionally comprising a clamping bolt (6), which passes through the through-openings (7) and interacts by tensioning with a counter-element (8) in order to apply the clamping force, the bolt head being arranged on sides of the exterior (11) of the one jaw-shaped component (2) and the counter-element (8) on sides of the exterior (11) of the jaw-shaped component (2) and the counter-element (8) on sides of the exterior (11) of the other jaw-shaped component (3),
**characterized**
**in that** the one jaw-shaped component (2) is of elastically flexible design, at least in the thickness direction, and that the other jaw-shaped component (3) is of flexurally rigid design, at least in the thickness direction.

2. Device according to Claim 1,
**characterized**
**in that** the two components (2, 3) are made from the same material, the flexurally rigid component (3) being designed with a correspondingly large wall thickness and the elastically flexible component (2) with a correspondingly small wall thickness.

3. Device according to either of Claims 1 or 2,
**characterized**
**in that** the two components (2, 3) are fitted to the body of the vehicle.

4. Device according to either of Claims 1 or 2,
**characterized**
**in that** the two component (2, 3) are arranged on a mounting bracket (5), which is firmly fixed to the vehicle.

5. Device according to any one of Claims 1 to 4,
**characterized**
**in that** at least one transversely flexible shim (12, 13), which is fixed to the steering column casing tube, is arranged on the clamping bolt (6) next to an exterior (10, 11) of at least one of the components (2, 3).

## Revendications

1. Dispositif de serrage (1) pour la colonne de direction d'un véhicule automobile, lequel dispositif (1) contient deux composants (2, 3) en forme de mâchoires verticales s'étendant parallèlement l'un à l'autre, qui sont montés directement à la carrosserie du véhicule ou à une console de montage (5) fixée au véhicule, entre lesquels s'étend un tube-enveloppe de la colonne de direction et qui présentent deux ouvertures de passage (7) opposées, le dispositif (1) contenant en outre un boulon de serrage (6), qui traverse les ouvertures de passage (7) et qui coopère par serrage avec un organe conjugué (8) pour appliquer la force de serrage, la tête de boulon étant disposée du côté du côté extérieur (11) d'un composant (2) en forme de mâchoire et l'organe conjugué (8) étant disposé du côté du côté extérieur (11) de l'autre composant (3) en forme de mâchoire,
**caractérisé en ce**
**que** l'un composant (2) en forme de mâchoire est réalisé de manière élastique au moins dans la direction de son épaisseur, et en ce que l'autre composant (3) en forme de mâchoire est réalisé de manière rigide en flexion au moins dans la direction de son épaisseur.

2. Dispositif selon la revendication 1,
**caractérisé en ce que**
les deux composants (2, 3) sont formés du même matériau, le composant rigide en flexion (3) étant réalisé avec une plus grande épaisseur de paroi en conséquence et le composant élastique (2) étant réalisé avec une plus faible épaisseur de paroi en conséquence.

3. Dispositif selon l'une quelconque des revendications 1 ou 2,
**caractérisé en ce que**
les deux composants (2, 3) sont montés sur la carrosserie du véhicule.

4. Dispositif selon l'une quelconque des revendications 1 ou 2,
**caractérisé en ce que**
les deux composants (2, 3) sont disposés sur une console de montage (5), qui est fixée au véhicule.

5. Dispositif selon l'une quelconque des revendications 1 à 4,
**caractérisé en ce que**
sur le boulon de serrage (6), à côté d'un côté extérieur (10, 11) d'au moins l'un des composants (2, 3) est disposée au moins une lamelle (12, 13) élastique dans la direction transversale, qui est fixée au tube-enveloppe de la colonne de direction.
